# EUROPEAN PATENT APPLICATION

(11) **EP 3 139 352 A1**
(43) Date of publication of application: **08.03.2017**
(21) Application number: 15465537.7
(22) Date of filing: 07.09.2015
(51) Int. Cl.: G07C 5/08, G06Q 20/18, G07F 17/00

(54) **OBD DIAGNOSIS TERMINAL AND METHOD TO USE**

(71) Applicant: Continental Automotive GmbH, 30165 Hannover (DE)
(72) Inventor: Aldea-Ungurean, Doru, 307285 Mosnita Noua (RO); Botiz, Ciprian Vasile, 300693 Timisoara (RO)

(57) **Abstract**

The invention relates to OBD diagnosis terminal (1) for cars and motorcycles, with a connector plug (6) to connect the OBD diagnosis terminal (1) to the OBD port of a motor vehicle and with a human machine interface (2) to interact with the OBD diagnosis terminal (1), whereby the OBD diagnosis terminal (1) comprises a payment unit (4), through which the customer can pay for the used services. Furthermore the invention relates to a method for the use of such an OBD diagnosis terminal.

## Description

### Technical field

The invention relates to an OBD diagnosis terminal for cars and motorcycles, with a connector plug to connect the diagnosis terminal to the OBD port of a motor vehicle and with a human machine interface to interact with the diagnosis terminal. Furthermore the invention relates to a method to use the OBD diagnosis terminal.

### Prior art

Modern motor vehicles are usually equipped with an on board diagnosis system called OBD. This system is used to evaluate the functionality of the motor vehicle and to access the error memory of the motor vehicle. Especially the state and the functionality of numerous sensors of the motor vehicle are monitored constantly to ensure the correct function of them.

The OBD system has a standardized mechanical interface in which a standardized connector plug from an external diagnosis terminal can be inserted. The external diagnosis terminal can then read out the relevant data from the OBD system. The result of the read out of the diagnosis terminal can be used to identify malfunctions or defects of the motor vehicle, such as incorrect combustion, untypical composition of the exhaust gas or errors in the engine management. From the data received by the diagnosis terminal proper repair and service routines can be defined.

Diagnosis terminals to read out the data from the OBD system are well known in car repair shops. Customers usually do not have such diagnosis terminals at home or for their private use, as the terminals are expensive and are used only a few times a year. The use of the diagnosis terminals in car repair shops is usually only possible in combination with repairs or regular inspections, which cause substantial costs for the customer.

It is especially disadvantageous that customers do not have public access to diagnosis terminals, which they can use on a purely need basis without the need for scheduling an appointment or the need to visit a car repair shop. By performing regular read outs of the OBD system customers can evaluate the functionality and the integrity of their motor vehicle better and it may be possible to avoid critical damages or defects by a timely reaction.

### Summary of the invention, problem, solution, advantages

The problem addressed by the present invention is therefore to provide an OBD diagnosis terminal for cars and motorcycles, which can easily be used by customers on a need basis without the need to purchase an OBD diagnosis terminal or to visit a car repair shop. Furthermore the present invention provides a method for the use of such an OBD diagnosis terminal.

The problem with respect to the OBD diagnosis terminal is solved by means of the OBD diagnosis terminal with the features of claim 1.

An exemplary embodiment of the invention relates to an OBD diagnosis terminal for cars and motorcycles, with a connector plug to connect the OBD diagnosis terminal to the OBD port of a motor vehicle and with a human machine interface to interact with the OBD diagnosis terminal, whereby the OBD diagnosis terminal comprises a payment unit, through which the customer can pay for the used services.

The OBD diagnosis terminal comprises a plug, which can be plugged into the receiving socket of the OBD interface in the motor vehicle. The OBD diagnosis terminal can read and/or write data from the motor vehicle or onto the motor vehicle. The human machine interface can be used to interact with the OBD diagnosis terminal to choose between different diagnoses procedures or to change the model and the make of the motor vehicle.

A motor vehicle can be a car, a motorcycle or any other type of vehicle with an installed OBD system.

The payment unit of the OBD diagnosis terminal can be used to pay for the use of the OBD diagnosis terminal. As the OBD diagnosis terminal is preferably installed in a public place such as a gas station, the driver has more or less unlimited access to the OBD diagnosis terminal. The OBD diagnosis terminal is owned by the company or institution that provides the service for the driver. In exchange for the use of the OBD diagnosis terminal a service fee has to be paid by the driver. This way the driver does not have to have an own OBD diagnosis terminal and does not have to have an appointment with a car repair shop or any other company offering OBD diagnoses.

A suitable location for an OBD diagnosis terminal can be virtually anywhere, as long as the location can be reached by the car or the motorcycle that should be diagnosed. Preferably the OBD diagnosis terminal is located in a place that is well connected to the infrastructure to ensure the power supply and a connection to a landline for the data transfer. Preferable locations are, besides a gas station, a parking lot of a shopping center or other public areas, which are regularly frequented by cars and/or motorcycles.

The driver is therefore free to choose when and where he would like to perform a diagnosis on his car. Especially, if he suspects a malfunction and wants to get a better understanding of the overall condition of his motor vehicle, he can use the service of a pay OBD diagnosis terminal like the OBD diagnosis terminal according to the present invention.

It is particularly advantageous if the OBD diagnosis terminal comprises a wireless LAN (WIFI) interface. A wireless LAN interface is advantageous as it allows for a cable-free connection with the World Wide Web or other secondary electronic means. For instance a connection to the OBD system of the motor vehicle can be established by using a suitable connector or dongle instead of a cable.

It is also advantageous if the human machine interface is a touch screen display. A touch screen display is advantageous as it allows an easy two way communication between the OBD diagnosis terminal and the driver.

One preferred exemplary embodiment is characterized in that the payment unit is equipped for the use of a near field communication device and/or for the use of credit cards and/or for the use of debit cards and/or for the use of cash. This is preferable, as it allows the driver to choose between different paying methods and therefore enhances the comfort level for the use of the OBD diagnosis terminal. The prices for different diagnosis procedures or for different motor vehicles can vary. An alternative paying model could be the use of payment plans, which offer a certain number of diagnoses for the driver for a fixed amount.

The payment unit can be integrated into a gas pump at a gas station in order to combine the payment for gas with the payment for the use of the OBD diagnosis terminal.

It is also preferred if the OBD diagnosis terminal is connected to the World Wide Web in order to transfer the results of the diagnosis to a remote server or an email account. This is advantageous to make the results of the diagnosis readily available for the driver on a device of his choosing.

Furthermore, it is advantageous if the OBD diagnosis terminal is integrated into the gas pump of a gas station. The integration into the gas pump is beneficial, as the same housing can be used for both appliances. Furthermore the gas pump and the OBD diagnosis terminal can use the same power supply. The driver can easily perform the diagnosis on his motor vehicle while he is refueling the motor vehicle. This is beneficial, as it saves time for the driver.

It is also expedient if the OBD diagnosis terminal comprises an interface to a mobile communication network such as GPRS or GSM or UMTS or LTE to provide a maintenance access to the OBD diagnosis terminal and/or to send data to remote recipients. This is advantageous, as it is very easy to maintain or update the OBD diagnosis terminal without a connection to a landline. Also the transmission of the results to a remote device of the driver or to an email account can easily be done via a mobile communication network. The connection to a mobile communication network can also be very useful as a backup to ensure that the OBD diagnosis terminal can be remotely accessed at all times, even when the landline connection fails or is unavailable.

It is particularly advantageous if the connector plug is connected to the OBD diagnosis terminal cable-free via a radio link. This is beneficial, as it eliminates the cable, which can be bothersome.

The problem with respect to the method is solved by means of a method having the features of claim 9.

An exemplary embodiment of the invention relates to a method to operate an OBD diagnosis terminal as claimed in the previous claims, wherein the following steps are executed:
▪ the car is connected to the terminal via a cable based or cable-free connection,
▪ the driver specifies the model and the make of the connected vehicle via the human machine interface,
▪ the terminal prompts the price of the diagnosis on the touch screen display for the driver to see,
▪ the driver pays the necessary amount via the payment unit,
▪ the OBD diagnosis terminal performs the diagnosis which was chosen by the driver,
▪ the OBD diagnosis terminal asks for an email address to send the results to or offers to print the results, and
▪ the driver disconnects the terminal from the car.

Such a method is beneficial, as it offers an easy and convenient way to complete an OBD diagnosis on a motor vehicle without the need to own an OBD diagnosis terminal. The method therefore offers a cheap possibility to perform an OBD diagnosis without assistance from a professional technician.

Advantageous developments of the present invention are described in the dependent claims and in the following description of the figures.

### Brief description of the drawings

The invention will be explained in detail below on the basis of an exemplary embodiment with reference to the drawing, in which:

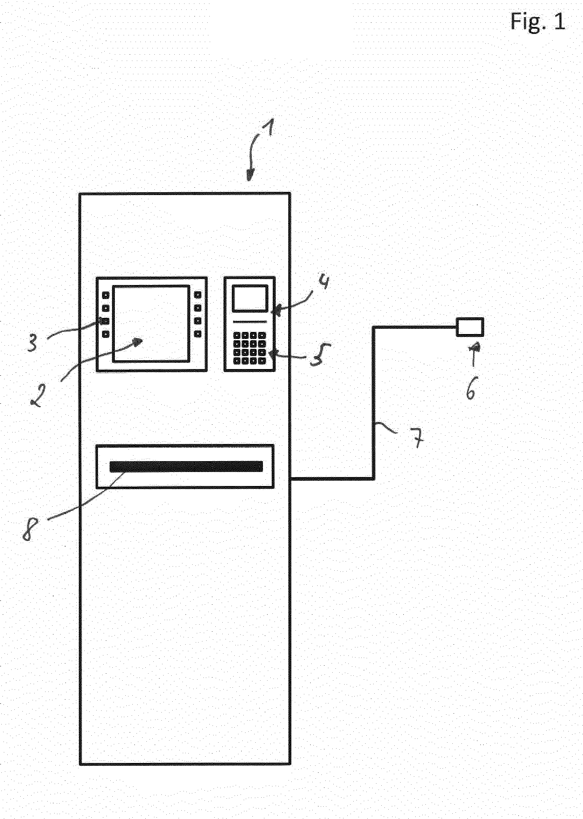

- Fig. 1: shows a schematic view of an OBD diagnosis terminal.

### Preferred embodiment of the invention

Figure 1 shows a schematic view of an OBD diagnosis terminal 1 in a preferred embodiment. The OBD diagnosis terminal 1 comprises a touch screen display 2, which can be fitted with additional hard-keys 3 at the sides of the touch screen 2. The hard-keys 3 for instance can be used for predefined actions or for changing values to simplify the interaction with the user. An alternative embodiment can comprise a touch screen without hard-keys, whereby the interaction with the user is solely based on the touch screen.

Furthermore the OBD diagnosis terminal 1 comprises a payment unit 4. The payment unit 4 offers a second set of hard-keys 5 for the use of the payment unit 4. The payment unit 4 is constructed like payment units known from ATM-machines or from other automated paying machines, e.g. at parking lots. The payment unit 4 is equipped for different payment methods, such as credit cards, debit cards, near field communication devices or cash.

A groove 8 is located in the midsection of the OBD diagnosis terminal 1, through which a printout of the results of the diagnosis or a receipt can be printed. This offers the additional possibility for the user to take a printout of the results directly from the OBD diagnosis terminal 1 after the completion of the diagnosis.

The OBD diagnosis terminal 1 comprises in addition a connector plug 6, through which it can be electrically connected to the OBD system of the motor vehicle. In the embodiment of figure 1 the connector plug 6 is connected to the OBD diagnosis terminal 1 by a cable 7. In alternative embodiments the connection between the connector plug and the OBD diagnosis terminal can also be realized with a cable-free connection.

The embodiment of figure 1 is exemplary for a wide variety of possible embodiments of an OBD diagnosis terminal. The technical elements can also be included in the housing of a gas pump or any other suitable housing at a gas station, which offers convenient access for the user. Figure 1 illustrates the different elements that can be realized in an OBD diagnosis terminal 1. It does not limit the scope of the invention to this individual embodiment.

### List of reference signs

- 01: OBD diagnosis terminal
- 02: Touch screen
- 03: Hard-keys
- 04: Payment unit
- 05: Hard-keys
- 06: Connector plug
- 07: Cable
- 08: Groove

## Claims

1. OBD diagnosis terminal (1) for cars and motorcycles, with a connector plug (6) to connect the OBD diagnosis terminal (1) to the OBD port of a motor vehicle and with a human machine interface (2) to interact with the OBD diagnosis terminal (1), **characterized in that** the OBD diagnosis terminal (1) comprises a payment unit (4), through which the customer can pay for the used services.

2. OBD diagnosis terminal (1) after claim 1, **characterized in that** the OBD diagnosis terminal (1) comprises a wireless LAN (WIFI) interface.

3. OBD diagnosis terminal (1) after one of the previous claims, **characterized in that** the human machine interface (2) is a touch screen display.

4. OBD diagnosis terminal (1) after one of the previous claims, **characterized in that** the payment unit (4) is equipped for the use of a near field communication device and/or for the use of credit cards and/or for the use of debit cards and/or for the use of cash.

5. OBD diagnosis terminal (1) after one of the previous claims, **characterized in that** the OBD diagnosis terminal (1) is connected to the World Wide Web in order to transfer the results of the diagnosis to a remote server or an email address.

6. OBD diagnosis terminal (1) after one of the previous claims, **characterized in that** the OBD diagnosis terminal (1) is integrated into the gas pump of a gas station.

7. OBD diagnosis terminal (1) after one of the previous claims, **characterized in that** the OBD diagnosis terminal (1) comprises an interface to a mobile communication network such as GPRS or GSM or UMTS or LTE to provide a maintenance access to the terminal and/or to send data to remote recipients.

8. OBD diagnosis terminal (1) after one of the previous claims, **characterized in that** the connector plug (6) is connected to the OBD diagnosis terminal (1) cable-free via a radio link.

9. Method to operate a OBD diagnosis terminal (1) as claimed in the previous claims, **characterized in that** the following steps are executed:
▪ the car is connected to the OBD diagnosis terminal via a cable (7) based or cable-free connection,
▪ the driver specifies the model and the make of the connected vehicle via the human machine interface (2),
▪ the OBD diagnosis terminal (1) prompts the price of the diagnosis on the touch screen (2) display for the driver to see,
▪ the driver pays the necessary amount via the payment unit (4),
▪ the OBD diagnosis terminal (1) performs the diagnosis which was chosen by the driver,
▪ the OBD diagnosis terminal (1) asks for an email address to send the results to or offers to print the results,
▪ the driver disconnects the OBD diagnose terminal (1) from the car.
